# EUROPEAN PATENT APPLICATION

(11) **EP 4 703 685 A1**
(43) Date of publication of application: **04.03.2026**
(21) Application number: 24197357.7
(22) Date of filing: 29.08.2024
(51) Int. Cl.: G01C 21/34, G06Q 10/047, G06Q 50/40

(54) **SYSTEM AND METHOD FOR DISPATCH PLANNING OF ELECTRIC VEHICLE FLEET**

(71) Applicant: Siemens Aktiengesellschaft, 80333 München (DE)
(72) Inventor: KUMAR, Abhay, 560100 Bangalore (IN); RAVICHANDRAN, Suja Shree, 600036 Chennai (IN); BACH, Jeffrey, Aurora, IL 60502 (US)
(74) Representative: Patentanwaltskanzlei WILHELM & BECK

(57) **Abstract**

A method (100) for dispatch planning of an electric vehicle (EV) fleet is disclosed, which optimizes route assignments and charging schedules. The method comprises obtaining fleet, route, and energy pricing information, including initial states of charge (SoC) and required SoC for each route. For each route, the method involves determining a pre-trip SoC and a post-trip SoC for feasible EVs, selecting an EV based on predefined criteria, and mapping it to the route. A charging schedule is determined using a charging duration factor (CDF) which is inversely proportional to average energy costs. The method outputs a dispatch plan with route mappings and the charging schedule. This approach balances maximizing fleet utilization with minimizing charging costs, offering a scalable solution for efficient EV fleet management.

## Description

The present invention relates to the field of electric vehicle (EV) fleet management. More specifically, the present invention pertains to systems and methods for optimizing dispatch planning and charging schedules for a fleet of electric vehicles.

Electric vehicle (EV) fleets are becoming increasingly prevalent in various sectors, including public transportation, logistics, and corporate operations. These fleets typically consist of multiple EVs with different battery capacities, charging requirements, and operational capabilities. Fleet operators are responsible for managing the dispatch of these vehicles to serve various routes while ensuring efficient energy usage and minimizing operational costs.

However, managing an EV fleet presents several challenges. As fleet sizes increase, manually creating efficient dispatch plans becomes increasingly complex and time-consuming. Fleet operators may need to account for various factors simultaneously, including different types of vehicles, varying battery capacities, diverse charging infrastructure (such as slow and fast chargers, sequential and standard chargers), and fluctuating energy prices throughout the day. The objective of maximizing fleet utilization while minimizing charging energy costs becomes exponentially more difficult as the number of variables increases. For smaller fleets of 10-20 vehicles, manual planning may be feasible, but for larger fleets, it becomes humanly impossible to create an efficient plan that considers all these factors.

Traditional solutions for EV fleet dispatch planning often employ basic scheduling algorithms or manual planning methods. These approaches typically consider factors such as route distances, vehicle availability, and simple time-based scheduling. Some more advanced systems may incorporate basic energy consumption calculations or basic charging time estimations. However, these known solutions have significant limitations. They often fail to fully optimize the dispatch plan, leading to suboptimal fleet utilization and increased operational costs. Many systems do not adequately account for the dynamic nature of energy pricing, potentially resulting in higher charging costs.

Some known solutions for EV fleet dispatch planning employ heuristic and mathematical optimization approaches. These include algorithms based on well-known problems such as the Knapsack problem (KP), Traveling Salesman Problem (TSP), Capacitated Vehicle Routing Problem (CVRP), and Vehicle Routing Problem with Time Windows (VRPTW). Popular algorithms used to solve these problems include dynamic programming, mixed integer linear programming, genetic algorithms, tabu search, and simulated annealing. These approaches typically focus on minimizing the distance covered by optimizing routing patterns.

However, these known solutions also have certain limitations. Many of these approaches do not adequately account for charging costs as a key objective, instead focusing primarily on maximizing EV distance or the number of routes covered. Additionally, they often fail to consider the complexities of mixed fleets containing both electric and fuel-based vehicles (such as, diesel vehicles (DVs)), which is common in many depots as they transition to all-electric fleets. These algorithms may not effectively balance the trade-offs between using EVs and DVs based on factors such as charging costs versus fuel costs, especially during periods of high energy tariffs.

There is a need for an advanced dispatch planning system that can effectively optimize the utilization of an EV fleet while minimizing energy costs. The present invention seeks to overcome these challenges by optimizing both route assignments and charging schedules, taking into account various factors such as initial states of charge, route requirements, and average energy cost. The present invention proposes a heuristic algorithm based approach to dispatch planning that maximizes fleet efficiency and minimizes operational costs, addressing the limitations of current solutions.

The object of the present invention is achieved by a computer-implemented method for dispatch planning of an electric vehicle (EV) fleet. The method comprises obtaining fleet information, route information, and energy pricing information associated with the EV fleet. Herein, the fleet information comprises initial states of charge (SoC) for each EV in the fleet, the route information comprises a set of routes to be served in a defined operation period and distances to be covered in each route, and the energy pricing information comprises average energy cost for charging. The method further comprises receiving information indicating a required SoC for each EV to serve each route in the set of routes. The method further comprises, for each route in the set of routes, determining, for one or more EVs, a pre-trip SoC based on the initial SoC and a charging potential based on available charging time before the route, and a post-trip SoC based on the pre-trip SoC and energy consumption for the route; selecting an EV for the route based on a predefined selection criterion related to at least one of the pre-trip SoC and the post-trip SoC; and mapping the selected EV to the route. The method further comprises determining a charging schedule for the EV fleet based on a charging duration factor (CDF). The CDF is determined based on the energy pricing information and is inversely proportional to the average energy cost during a charging period. The method further comprises outputting a dispatch plan comprising the route mappings and the charging schedule for the EV fleet.

In one or more embodiments, the method also comprises generating a vehicle-route feasibility matrix comprising EVs and routes as rows and columns, wherein each cell of the vehicle-route feasibility matrix represents a required SoC for a corresponding EV to serve a corresponding route. The method further comprises populating the cells of the vehicle-route feasibility matrix with required SoC values determined based on the fleet information and the route information. The method further comprises marking cells of the vehicle-route feasibility matrix as infeasible based on predefined constraints including at least one of vehicle range limitations, vehicle type compatibility, and schedule overlapping.

In one or more embodiments, the pre-trip SoC, the charging potential, the post-trip SoC and the energy consumption for the route are determined for each of feasible EVs. Herein, the feasible EVs include EVs which have corresponding cells in the vehicle-route feasibility matrix that are not marked as infeasible for the given route.

In one or more embodiments, the method further comprises updating the vehicle-route feasibility matrix after mapping each selected EV to a route to reflect routes with time slots overlapping time slots occupied by the mapped route.

In one or more embodiments, the predefined constraints for marking cells as infeasible in the vehicle-route feasibility matrix further include at least one of: battery capacity limitations, charging infrastructure availability, and required vehicle features for specific routes.

In one or more embodiments, selecting an EV for the route based on a predefined selection criterion comprises selecting the EV with a lowest post-trip SoC.

In one or more embodiments, determining the charging schedule further comprises ensuring that each EV is charged to a required SoC based on available charging facilities at corresponding depot.

In one or more embodiments, the method also comprises determining a total distance covered by the EV fleet based on the dispatch plan by summing the distances of all routes assigned to the EVs. The method further comprises determining a total block distance by summing the distances of all routes in the set of routes, including both assigned and unassigned routes. The method further comprises determining a distance coverage percentage based on the total distance covered by the EV fleet and the total block distance.

In one or more embodiments, the method also comprises comparing the determined distance coverage percentage to a predetermined target percentage. If the determined distance coverage percentage is below the target percentage, the method comprises iteratively adjusting the dispatch plan to accommodate one or more unassigned routes with minimal impact on the charging schedule. If the determined distance coverage percentage is above the target percentage, the method comprises optimizing the charging schedule to further minimize energy costs with minimal impact on the high distance coverage percentage.

In one or more embodiments, the method also comprises comparing energy costs for charging EVs with fuel costs for fuel-based vehicles. The method further comprises updating the dispatch plan to allocate EVs and fuel-based vehicles to the routes based on the comparison, to minimize total cost.

The object of the present invention is also achieved by a system comprising one or more processing units and a memory unit communicatively coupled to the one or more processing units. Herein, the memory unit comprises a dispatch planning module stored in the form of machine-readable instructions executable by the one or more processing units, wherein the dispatch planning module is configured to perform aforementioned method steps for dispatch planning of an electric vehicle (EV) fleet.

The object of the present invention is further achieved by a computer program product comprising computer program code which, when executed by a processor, cause the processor to carry out steps of the aforementioned method.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for dispatch planning of an electric vehicle fleet, in accordance with one or more embodiments of the present invention;
FIG 2 is a block diagram representation of a system for dispatch planning of an electric vehicle fleet, in accordance with one or more embodiments of the present invention; and
FIG 3 is a flow diagram of a process for dispatch planning of an electric vehicle fleet, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for dispatch planning of an electric vehicle fleet are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In the present context, an "electric vehicle fleet" refers to a group of electric vehicles that are collectively managed and operated for the purpose of serving a set of routes within a defined operation period. Each electric vehicle within the electric vehicle fleet is powered by an electric battery, and the management of the electric vehicle fleet involves the coordination of routes to be served, the initial states of charge (SoC) of the electric vehicles, and the scheduling of charging activities based on average energy cost. The electric vehicle fleet is subject to a dispatch plan that maps specific electric vehicles to specific routes and determines a charging schedule based on the operational parameters associated with the electric vehicle fleet. The performance of the electric vehicle fleet is measured by metrics such as the total distance covered and the distance coverage percentage, with adjustments made to the dispatch plan as necessary to achieve optimal fleet operation.

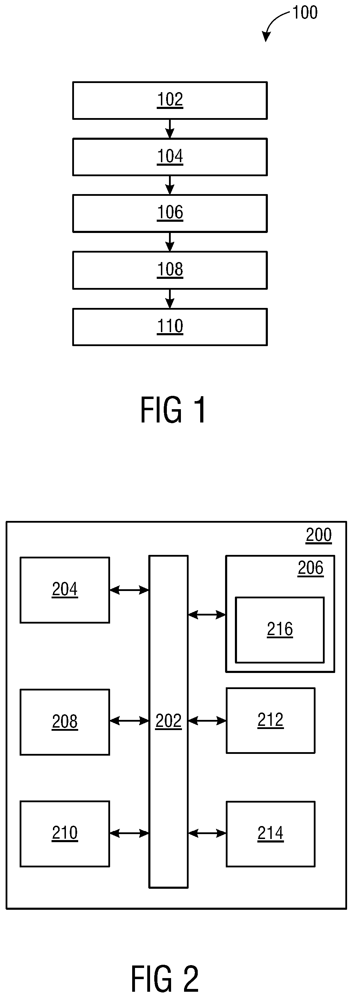

Referring to FIG 1, illustrated is a flowchart of a method (as represented by reference numeral 100) for dispatch planning of an electric vehicle (EV) fleet, in accordance with an embodiment of the present invention. The method 100 of the present invention leverages fleet information, route information, and energy pricing information to make informed decisions that ensure optimal vehicle utilization and cost-effective energy management. This information is used to determine pre-trip and post-trip states of charge for EVs, enabling intelligent selection of vehicles for each route based on predefined criteria. The method 100 optimizes both route assignments and charging schedules, taking into account various factors such as initial states of charge, route requirements, and average energy cost.

Referring to FIG 2, illustrated is a block diagram of a system 200 for dispatch planning of an electric vehicle fleet, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for dispatch planning of an electric vehicle fleet. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for dispatch planning of an electric vehicle fleet. In particular, the memory unit 206 includes a dispatch planning module 216 to perform steps for the said purpose.

Referring to FIGS 1-2 in combination, various steps of the method 100 (as described hereinafter), which may be executed in the system 200, or specifically in the processing unit 204 of the system 200, for dispatch planning of an electric vehicle fleet, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes obtaining fleet information, route information, and energy pricing information associated with the EV fleet. These information types are all associated with the EV fleet, and used for subsequent dispatch planning calculations. The fleet information comprises initial states of charge (SoC) for each EV in the fleet. The initial SoC represents the amount of charge present in the battery of each EV at the start of the dispatch planning process. This information is utilized for determining which vehicles have sufficient charge to serve particular routes and which vehicles may need charging before being dispatched. The route information comprises a set of routes to be served in a defined operation period and distances to be covered in each route. The route information is utilized for calculating the energy requirements for each trip and determining which EVs are capable of serving each route based on their current state of charge and range capabilities. The energy pricing information comprises average energy cost for charging. As may be appreciated, energy prices often fluctuate throughout the day, with periods of higher and lower costs. By obtaining this information, the method can later optimize the charging schedule to minimize overall energy costs for the fleet.

The process of obtaining this information may involve interfacing with various data sources. For instance, the fleet information may be gathered from an EV fleet management system that tracks the status of each vehicle. The route information may be obtained from a route planning system or a database (such as, the database 210) of predetermined routes. The energy pricing information may be acquired from the local energy provider or a real-time energy pricing service.

Such comprehensive set of information allows the method 100 to make informed decisions about vehicle assignments, charging schedules, and overall fleet management, with the goal of maximizing efficiency and minimizing costs.

At step 104, the method 100 includes receiving information indicating a required SoC for each EV to serve each route in the set of routes. Herein, the required SoC represents the minimum amount of charge an EV needs to have in order to successfully complete a specific route. This information is received for each possible pairing of EV and route within the set of routes to be served. The required SoC is typically calculated based on several factors derived from the previously obtained fleet and route information. In an example, the required SoC may be determined by considering the distance of each route, which is part of the route information obtained earlier. The method 100 may also consider the energy consumption rate of each EV, which may vary depending on the specific model and characteristics of the vehicle. Additional factors that may influence the required SoC include the expected driving conditions of the route, such as terrain and traffic patterns, and any auxiliary power needs, such as air conditioning or heating.

The process of receiving information about the required SoC may involve calculations performed by the system 200 implementing the method 100. These calculations convert the raw distance and vehicle efficiency data into specific SoC requirements. Alternatively, the required SoC information may be received from an external system that specializes in energy consumption predictions for EVs. Such information about the required SoC for each EV-route combination enables to determine which EVs are capable of serving which routes. This information may then be utilized in the subsequent steps of the dispatch planning process, such as for making decisions about route assignments and charging schedules (as discussed in the proceeding paragraphs).

At step 106, the method 100 includes a process that is executed for each route in the set of routes, involving a series of calculations performed for one or more EVs in relation to each specific route. Herein, for each route, the method 100 involves determining a pre-trip state of charge (SoC) for one or more EVs. The pre-trip SoC represents the expected charge level of an EV immediately before it begins the route. This calculation is based on the initial SoC of the EV and a charging potential based on available charging time before the route. The initial SoC, which was obtained as part of the fleet information, serves as the starting point for this calculation. The charging potential is determined by considering the amount of time available for charging before the route begins and the charging rate of the available charging infrastructure. The method 100 involves calculating how much additional charge can be added to the EV during this available time. In an example, determining the charging potential includes determining available charging time between routes; calculating maximum possible charge based on available charging time and charging rate of each EV; and determining the charging potential as a difference between the maximum possible charge and the initial SoC. The pre-trip SoC is then determined by adding the charging potential to the initial SoC. The pre-trip SoC gives an estimate of the charge level the EV will have at the start of the route, assuming it utilizes the available charging time.

Following the pre-trip SoC calculation, the method 100 then involves determining a post-trip SoC for the same EVs. The post-trip SoC represents the expected remaining charge of the EV after completing the route. This determination is based on the pre-trip SoC (as calculated) and energy consumption for the route. The energy consumption for the route is determined based on the route distance and the energy efficiency of the EV. The method 100 may involve subtracting the energy consumption from the pre-trip SoC to arrive at the post-trip SoC. The post-trip SoC gives an estimate of how much charge the EV will have remaining after completing the route.

As discussed, the pre-trip SoC represents the expected charge level of the EV immediately before beginning the route. This value is calculated by considering the initial SoC of the EV and adding any potential charging that could occur before the route begins. For example, if an EV has an initial SoC of 50% and there is time for charging that could add an additional 30% before the route starts, the pre-trip SoC would be calculated as 80%. The charging potential is determined based on the available charging time before the route and the charging rate of the available infrastructure. For instance, if there are two hours available for charging before a route and the charging rate is 10% per hour, the charging potential would be calculated as 20%. The energy consumption for the route is calculated based on the distance of the route and the energy efficiency of the EV. As an example, if a route is 100 kilometres long and an EV consumes 15% of battery charge per 100 kilometres, the energy consumption for this route would be calculated as 15%. The post-trip SoC is then calculated by subtracting the energy consumption for the route from the pre-trip SoC. Following the previous examples, if the pre-trip SoC was 80% and the energy consumption for the route was 15%, the post-trip SoC would be calculated as 65%.

These calculations of the pre-trip SoC and the post-trip SoC are performed for one or more EVs for each route. The "one or more EVs" may refer to all EVs in the fleet, or it may be limited to a subset of EVs that are potentially suitable for the route based on other constraints (as discussed later). Such information about the pre-trip SoC and the post-trip SoC allows to check for the viability and energy implications of assigning particular EVs to each route. This information is used in subsequent steps of the method 100 to make informed decisions about route assignments and to ensure that the resulting dispatch plan is energy-efficient and operationally viable.

In an embodiment, the method 100 includes additional steps for managing the complex relationships between EVs and routes. Herein, the method 100 includes generating a vehicle-route feasibility matrix (hereinafter, sometimes, referred to as "matrix" without any limitations) comprising EVs and routes as rows and columns. The specific arrangement of EVs and routes as rows or columns is flexible, but the matrix ensures that each EV-route combination is represented by a unique cell. Each cell of the vehicle-route feasibility matrix represents a required SoC for a corresponding EV to serve a corresponding route. After generating the structure of the matrix, the method 100 populates the cells of the vehicle-route feasibility matrix with required SoC values calculated based on the fleet information and the route information. As discussed, the SoC values are calculated based on the fleet information and the route information that was obtained. The required SoC for each EV-route combination is determined by considering factors such as the route distance, the energy efficiency of the EV, and any additional energy requirements specific to the route or the electric vehicle.

The method 100 then proceeds to marking cells of the vehicle-route feasibility matrix as infeasible based on predefined constraints. In present embodiments, the predefined constraints for marking cells as infeasible in the vehicle-route feasibility matrix further include at least one of: battery capacity limitations, charging infrastructure availability, and required vehicle features for specific routes. These constraints extend beyond the basic considerations of schedule overlapping and the like. The battery capacity limitations accounts for situations where the energy required for a route exceeds the total battery capacity of an EV, even if the vehicle were to start the route with a fully charged battery. For example, if a route requires 100 kWh of energy to complete, but an EV has a total battery capacity of only 80 kWh, the corresponding cell in the matrix would be marked as infeasible. The charging infrastructure availability considers the presence and type of charging stations available along a route or at the route's destination. If a route requires charging midway or at the endpoint, but suitable charging infrastructure is not available, the cells for EVs that would require such charging are marked as infeasible. The required vehicle features for specific routes are also considered when marking cells as infeasible. Some routes may have particular requirements that not all EVs in the fleet can meet. These requirements could include factors such as minimum passenger capacity, cargo space, or specific equipment installations. For example, if a route is designated for parcel delivery and requires a minimum cargo volume of 10 cubic meters, the cells for EVs with less than this cargo capacity would be marked as infeasible for this route.

Table 1 below shows an exemplary vehicle-route feasibility matrix as per the present embodiment.

**Table 1: Vehicle-Route Feasibility Matrix**

| | **R1** | **R2** | **R3** |
|---|---|---|---|
| **EV1** | 50 | Infeasible | 75 |
| **EV2** | Infeasible | 60 | 85 |
| **EV3** | 70 | 80 | Infeasible |

In an embodiment of the present invention, the pre-trip SoC, the charging potential, the post-trip SoC and the energy consumption for the route are determined for each of feasible EVs. In other words, the calculations of pre-trip SoC, charging potential, post-trip SoC, and energy consumption for each route are performed only for feasible EVs. The feasible EVs are defined as those EVs which have corresponding cells in the vehicle-route feasibility matrix that are not marked as infeasible for the given route. This approach ensures that calculations are only performed for EV-route combinations that are potentially viable, thereby optimizing computational resources. For each feasible EV, the pre-trip SoC, the charging potential, the post-trip SoC, and the energy consumption for the route are calculated.

These calculations are performed for each feasible EV for each route. For example, consider a scenario where there are three EVs (EV1, EV2, EV3) and three routes (R1, R2, R3). As shown in the exemplary Table 1, if the vehicle-route feasibility matrix indicates that EV1 is feasible for R1 and R3, EV2 is feasible for R2 and R3, and EV3 is feasible for R1 and R2, then the calculations would be performed for the following combinations: EV1-R1, EV1-R3, EV2-R2, EV2-R3, EV3-R1, and EV3-R2. By performing these calculations only for feasible EVs, the method 100 ensures that computational resources are used efficiently. The results of these calculations provide useful information for the subsequent steps of the dispatch planning process, enabling informed decisions about which EVs should be assigned to which routes to optimize overall fleet efficiency and minimize energy costs.

The method 100, then, includes selecting an EV for the route based on a predefined selection criterion related to at least one of the pre-trip SoC and the post-trip SoC. The predefined selection criterion is a set of rules or conditions that guide the choice of which EV to assign to a particular route. This criterion is related to at least one of the pre-trip state of charge (SoC) and the post-trip SoC. In an embodiment, selecting an EV for the route based on a predefined selection criterion comprises selecting the EV with a lowest post-trip SoC. The post-trip SoC represents the expected remaining charge of an EV after completing a given route. As discussed, this value is calculated by subtracting the estimated energy consumption for the route from the pre-trip SoC. The selection of the EV with the lowest post-trip SoC aims to maximize the utilization of the available battery capacity across the fleet. When implementing this selection criterion, the method 100 involves comparing the determined post-trip SoC values for all feasible EVs for a given route. Feasible EVs are those which have not been marked as infeasible in the vehicle-route feasibility matrix for the route in question. The method 100 then chooses the EV that has the lowest post-trip SoC among these feasible options.

This selection criterion operates under the principle that by choosing the EV with the lowest post-trip SoC, the routes are being assigned to EVs that will finish their trips with the least unused battery capacity. This approach helps to distribute the workload more evenly across the fleet and potentially reduces the overall number of charging sessions required. By consistently applying this selection criterion across all routes, the method 100 aims to create a dispatch plan that efficiently utilizes the available battery capacity of the entire EV fleet. This can lead to improved overall fleet efficiency and potentially reduce operational costs by minimizing the total amount of charging required across the EV fleet.

After selecting an EV for a route based on the predefined selection criterion, the method 100 includes mapping the selected EV to the route. This mapping process assigns the chosen EV to serve the specific route in the dispatch plan. The mapping of an EV to a route involves recording this assignment in the dispatch plan. This assignment indicates that the selected EV will be responsible for serving the particular route at the designated time. The mapping process ensures that each route in the set of routes is assigned to a suitable EV, creating a dispatch plan for the entire EV fleet.

The method 100 further comprises updating the vehicle-route feasibility matrix after mapping each selected EV to a route to reflect routes with time slots overlapping time slots occupied by the mapped route. The primary purpose of this update is to reflect routes with time slots that overlap with the time slots occupied by the newly mapped route. When an EV is mapped to a route, it becomes unavailable for other routes that have overlapping time slots. The method 100 involves identifying all routes in the set of routes that have any time overlap with the newly mapped route. For all these overlapping routes, the vehicle-route feasibility matrix is updated by marking the corresponding cells for the mapped EV as infeasible. This maintains an accurate representation of which EVs are available for which routes at any given point in the dispatch planning process.

At step 108, the method 100 includes determining a charging schedule for the EV fleet. This calculation is based on a charging duration factor (CDF) and is further based on maximum power considerations. The CDF is a key component in determining the optimal charging schedule. Herein, the CDF is determined based on the energy pricing information and is inversely proportional to the average energy cost during a charging period. This inverse relationship means that when energy costs are high, the CDF is low, and vice versa. The mathematical relationship between the CDF and average energy cost can be expressed as: CDF = K / (Average Energy Cost), where K is a constant that can be adjusted to fine-tune the sensitivity of the charging schedule to energy price fluctuations. The method 100 also incorporates maximum power considerations into the charging schedule calculation. Maximum power refers to the highest rate at which an EV can be charged, which is determined by both the capabilities of the EV and the charging infrastructure. This factor ensures that the charging schedule is physically feasible and does not exceed the limitations of the charging system. The method 100 prioritizes charging during periods with higher CDF values (i.e., lower energy costs) while ensuring that the charging rate does not exceed the maximum power capabilities of each EV and the charging infrastructure.

In an embodiment, determining the charging schedule further comprises ensuring that each EV is charged to a required SoC based on available charging facilities at corresponding depot. This constraint ensures that each EV is charged to a required state of charge (SoC) based on the available charging facilities at the corresponding depot. The method 100 considers the specific charging infrastructure available at each depot where the EVs are stationed. This infrastructure may vary from depot to depot and includes factors such as the number of charging stations, the types of chargers (e.g., slow chargers, fast chargers), and their power outputs. For each EV, the method 100 determines the required SoC. The required SoC is typically based on the energy needs of the next assigned route for the EV, which may include a safety margin to account for unexpected energy consumption. If the available charging infrastructure at a depot is insufficient to bring all EVs to their required SoC in the available time, the method 100 then adjust the dispatch plan. This could involve reassigning routes, adjusting departure times, or, in some cases, leaving some routes unassigned if there are not enough adequately charged EVs available. This balances the goals of minimizing charging costs (through the use of the CDF) with the operational requirement of ensuring all EVs are adequately charged for their assigned routes, while considering the constraints of the available charging infrastructure at each depot.

At step 110, the method 100 includes outputting a dispatch plan comprising the route mappings and the charging schedule for the EV fleet. The dispatch plan may be in the form of a document or data structure, which may be presented in an output device (such as, the output device 214). This could be a digital file (e.g., CSV, JSON, or XML), a database entry, or even a printed document, depending on the specific implementation and needs of the fleet management system. Herein, the route mappings component of the dispatch plan provides a detailed assignment of EVs to specific routes. This information typically includes: the route identifier; the assigned EV identifier; the scheduled start time of the route; the scheduled end time of the route; and the expected distance to be covered. The charging schedule component of the dispatch plan provides a detailed timeline for when and how each EV in the fleet should be charged. The charging schedule typically includes: the EV identifier; the assigned charging station or type of charger; the start time of the charging session; the end time of the charging session; the expected increase in SoC; etc. The dispatch plan balances the need for efficient route coverage with cost-effective charging, accounting for the various constraints and factors considered throughout the dispatch planning process.

In some embodiments, the method 100 for dispatch planning of the EV fleet includes additional steps for evaluating and optimizing the dispatch plan. These steps involve calculating various distance-related metrics and using these metrics to further refine the dispatch plan. Herein, the method 100 includes determining a total distance covered by the EV fleet based on the dispatch plan by summing the distances of all routes assigned to the EVs. For example, if the dispatch plan has assigned three routes to EVs with distances of 100 km, 150 km, and 200 km respectively, the total distance covered would be calculated as 450 km. The method 100 further includes determining a total block distance by summing the distances of all routes in the set of routes, including both assigned and unassigned routes (i.e., both the routes that have been assigned to EVs and those that remain unassigned). For instance, if there are two additional unassigned routes with distances of 75 km and 125 km, the total block distance would be calculated as 650 km (450 km from assigned routes + 200 km (75 km + 125 km) from unassigned routes). The method 100 then includes determining a distance coverage percentage based on the total distance covered by the EV fleet and the total block distance. The distance coverage percentage is calculated by dividing the total distance covered by the total block distance and multiplying by 100. In the example above, the distance coverage percentage would be (450 km / 650 km) * 100 = 69.23%.

After calculating these metrics, the method 100 proceeds to comparing the determined distance coverage percentage to a predetermined target percentage. This target percentage is a threshold set by the fleet operators to indicate the desired level of route coverage. Now, if the determined distance coverage percentage is below the target percentage, the method 100 includes iteratively adjusting the dispatch plan to accommodate one or more unassigned routes with minimal impact on the charging schedule. The goal of this process is to accommodate one or more previously unassigned routes while minimizing the impact on the existing charging schedule. This may involve identifying EVs with sufficient remaining charge to take on additional routes; adjusting charging times to create opportunities for serving additional routes; reassigning routes between EVs to create more efficient combinations; and the like. For example, if the target percentage is 75% and the current coverage is 69.23%, it may be tried to assign one of the unassigned routes (75 km or 125 km) to an EV that has sufficient charge and available time (if possible). Conversely, if the determined distance coverage percentage is above the target percentage, the method 100 includes optimizing the charging schedule to further minimize energy costs with minimal impact on the high distance coverage percentage. That is, in such case, the method 100 focuses on optimizing the charging schedule to further minimize energy costs, with the constraint of maintaining the high distance coverage percentage. This may involve shifting charging times to periods with lower energy costs; reducing charging durations for EVs that have more charge than necessary for their assigned routes; and the like. For instance, if the coverage percentage is 85% (above the 75% target), the charging schedule may be adjusted to prioritize charging during lower-cost periods, as long as these adjustments do not reduce the coverage below the target percentage. These additional steps allow the method 100 to refine and optimize the dispatch plan based on overall fleet performance metrics.

In an embodiment, the method 100 comprises additional steps to optimize the overall fleet efficiency by considering both EVs and fuel-based vehicles. This embodiment recognizes that many fleets operate with a mix of vehicle types, and seeks to minimize total operational costs by optimally allocating both EVs and fuel-based vehicles to routes. Herein, the method 100 first includes comparing energy costs for charging EVs with fuel costs for fuel-based vehicles. This comparison involves several calculations. For EVs, the method 100 involves determining the energy cost for each route. This is done by multiplying the energy consumption required for the route (in kWh) by the average energy cost during the expected charging period (in cost per kWh). For fuel-based vehicles, the method determines the fuel cost for each route. This is done by multiplying the fuel consumption required for the route (in litres or gallons) by the current fuel price. After performing these calculations, the method 100 involves comparing and determining whether an EV or a fuel-based vehicle would be more cost-effective for each specific route. Based on this comparison, the method 100 then includes updating the dispatch plan to allocate EVs and fuel-based vehicles to the routes based on the comparison, to minimize total cost. This updating process involves identifying routes where using an EV is more cost-effective and prioritizing EV allocation to these routes; identifying routes where using a fuel-based vehicle is more cost-effective and allocating fuel-based vehicles to these routes; considering operational constraints such as the number of available EVs and fuel-based vehicles; and the like. This approach can lead to significant cost savings, especially in scenarios where energy prices and fuel prices fluctuate, minimizing the total operational cost for the fleet operator.

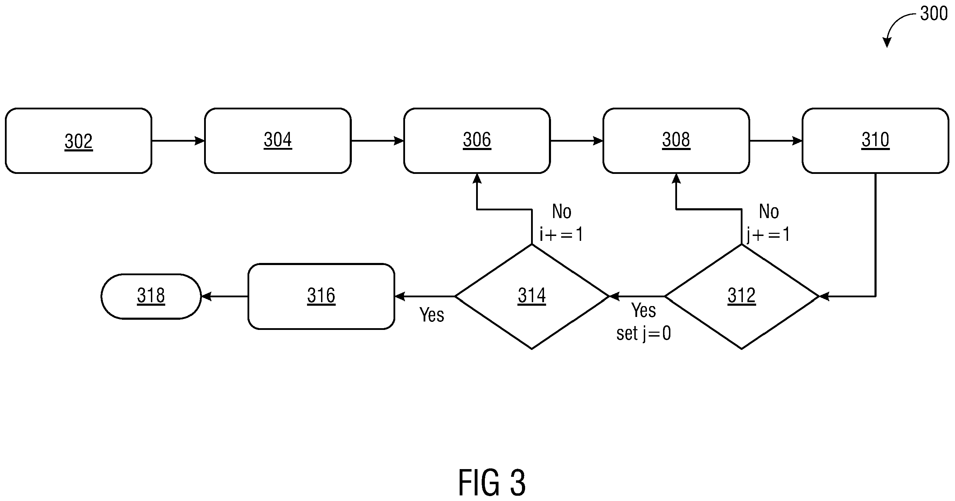

Referring to FIG 3, illustrated is a flow diagram of a process 300 for dispatch planning of an EV fleet. The process 300 begins with step 302, where fleet information (like vehicle details), route information (like each route details), and energy pricing information (like energy tariff details) are obtained. In step 304, a vehicle-route feasibility matrix is created. This matrix is structured with EVs and routes as rows and columns. Each cell of the matrix represents the required SoC for a corresponding EV to serve a corresponding route. The process 300 involves populating the cells with required SoC values calculated based on the fleet information and route information obtained in step 302. At this stage, the process 300 also initializes counters i and j to zero, which will be used to iterate through the EVs and routes respectively in subsequent steps.

In step 306, the process 300 selects a vehicle EV, and a feasible route Rⱼ from the matrix. This selection is based on the current values of counters i and j. The feasibility of an EV-route combination is determined by whether the corresponding cell in the matrix has been marked as infeasible based on predefined constraints such as vehicle range limitations, vehicle type compatibility, and schedule overlapping. In step 308, the process 300 involves determining the Charging Duration Factor (CDF) for the selected EV and route combination. The CDF is determined based on the energy pricing information and is inversely proportional to the average energy cost during the potential charging period. Additionally, the process 300 involves determining the pre-trip SoC for the selected EV. This pre-trip SoC is based on the initial SoC of the EV and the charging potential, which is determined by the available charging time before the route begins. In step 310, the process 300 involves, first, checking if the selected EV has sufficient SoC to serve the selected route. This is done by comparing the determined pre-trip SoC with the required SoC for the route. If the EV has sufficient SoC, the process proceeds to map the EV to the route Rⱼ. This mapping involves formally assigning the EV to serve the specific route in the dispatch plan. The process then updates the vehicle-route feasibility matrix to reflect this assignment, marking cells as infeasible for routes with time slots overlapping the newly assigned route.

In step 312, the process 300 involves checking if all feasible routes have been covered for the current EV (EVᵢ). This involves examining the updated vehicle-route feasibility matrix to determine if there are any remaining feasible routes for EVᵢ that have not yet been considered. If there are still feasible routes available, the process 300 increments the counter j by 1 and returns to the step 308 to select the next feasible route for EVᵢ. This loop ensures that each EV is considered for all its potential routes before moving on to the next EV. If all feasible routes for EVᵢ have been covered, the process 300 moves to the next decision point at step 314. In the step 314, the process 300 checks if all EVs in the fleet have been mapped to routes. This is done by comparing the current value of counter i to the total number of EVs in the fleet. If there are still unmapped EVs, the process 300 increments the counter i by 1 and returns to the step 306 to begin the route assignment process for the next EV. This ensures that the process 300 considers all EVs in the fleet for route assignments.

If all EVs have been mapped to routes, the process 300 proceeds to step 316, which involves preparing a dispatch plan with details about fleet summary and charging schedule. The fleet summary may include details such as the total distance covered by the EV fleet, which is calculated by summing the distances of all routes assigned to EVs. The charging schedule may include details such as the maximum power limitations of both the EVs and the charging infrastructure. Finally, the process ends at step 318, where the dispatch plan for the EV fleet is outputted, comprising the route mappings (which EV is assigned to which route) and the optimized charging schedule for the EV fleet.

The present method 100, based on heuristic algorithm, for dispatch planning of an EV fleet has been tested using a fleet operator data and compared with a mixed integer linear programming (MILP) algorithm. The results of this comparison for a depot demonstrate the effectiveness and efficiency of the proposed heuristic algorithm, as provided in Table 2 below.

**Table 2: Comparison between existing and proposed approaches.**

| **MILP Algorithm** | **Heuristic Algorithm** | |
|---|---|---|
| | Without cost optimization | With cost optimization |
| "fleetSummary": | "fleetSummary": | "fleetSummary": |
| "Total number of eBuses": 46, | "Total number of eBuses": 46, | "Total number of eBuses": 46, |
| "Number of buses mapped": 46, | "Number of buses mapped": 46, | "Number of buses mapped": 46, |
| | "Total number of input routes": 282, | |
| "Total number of input routes": 282, | | "Total number of input routes": 282, |
| | "Number of routes mapped": 70, | |
| "Number of routes mapped": 96, | "Total distance covered": 12102.0, | "Number of routes mapped": 72, |
| "Total distance covered": 13074.0, | "Total Block Distance": 41072.0, | "Total distance covered": 12274.0, |
| | "Distance coverage (%)": 29.5, | |
| "Total Block Distance": 41072.0, | "Total energy cost": 738,040.5 | "Total Block Distance": 41072.0, |
| "Distance coverage (%)": 31.8 | | "Distance coverage (%)": 29.9, |
| "Total energy cost": 0 | | |
| | | "Total energy cost": 655,996.7 |
| Solution time: 45 seconds | Solution time: 2 seconds | Solution time: 2 seconds |

As may be seen in Table 2, for a fleet of 46 electric buses and a total of 282 input routes, the MILP algorithm mapped 96 routes, covering a total distance of 13,074.0 units. This resulted in a distance coverage percentage of 31.8% of the total block distance of 41,072.0 units. The solution time for the MILP algorithm was 45 seconds. The heuristic algorithm was tested in two scenarios: without cost optimization and with cost optimization. Without cost optimization, the heuristic algorithm mapped 70 routes, covering a total distance of 12,102.0 units, resulting in a distance coverage of 29.5%. The total energy cost in this scenario was 738,040.5 units. With cost optimization enabled, the heuristic algorithm mapped 72 routes, covering a total distance of 12,274.0 units, achieving a distance coverage of 29.9%. The total energy cost in this optimized scenario was reduced to 655,996.7 units.

The results indicate that while the MILP algorithm covers slightly more distance (approximately 2% more than the heuristic algorithm), the solution time for both scenarios of the heuristic algorithm was only 2 seconds, significantly faster than the MILP algorithm. This substantial difference in solution time demonstrates the scalability potential of the heuristic algorithm, making the heuristic algorithm more suitable for large-scale fleet operations where rapid decision-making is required. The MILP algorithm, while providing an optimum result, exhibits limitations in terms of scalability, requires license costs, and is complex to upgrade. In contrast, the proposed heuristic algorithm based approach employs simple logic, operates very quickly, offers scalability, and does not involve license costs. The heuristic algorithm produces results that are close to the optimum point achieved by the MILP algorithm.

The method 100 for dispatch planning of an EV fleet, as per the present invention, provides an approach that simultaneously addresses objectives of maximizing the distance covered by the EV fleet and minimizing the charging costs. The method 100 can be operates without the need for specialized optimization software licenses, which significantly reduces implementation costs for fleet operators. The solution time of the method 100 is substantially faster compared to existing approaches, particularly MILP methods, allowing it to efficiently handle large fleets. Furthermore, the heuristic nature of the method 100 allows for easier addition and modification of features without requiring advanced mathematical optimization skills, which are typically necessary for MILP approaches. Such combination of cost minimization and distance maximization, along with speed, scalability, and ease of modification of the method 100 provides a valuable tool for fleet operators seeking to optimize their EV operations in an increasingly complex and cost-sensitive environment.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 102 |
| step | 104 |
| step | 106 |
| step | 108 |
| step | 110 |
| system | 200 |
| bus | 202 |
| processing unit | 204 |
| memory unit | 206 |
| interface | 208 |
| database | 210 |
| input device | 212 |
| output device | 214 |
| dispatch planning module | 216 |
| process | 300 |
| step | 302 |
| step | 304 |
| step | 306 |
| step | 308 |
| step | 310 |
| step | 312 |
| step | 314 |
| step | 316 |
| step | 318 |

## Claims

1. A computer-implemented method (100) for dispatch planning of an electric vehicle (EV) fleet, the method (100) comprising implementing a processing unit (204) for:
obtaining fleet information, route information, and energy pricing information associated with the EV fleet, wherein the fleet information comprises initial states of charge (SoC) for each EV in the fleet, the route information comprises a set of routes to be served in a defined operation period and distances to be covered in each route, and the energy pricing information comprises average energy cost for charging;
receiving information indicating a required SoC for each EV to serve each route in the set of routes;
for each route in the set of routes:
determining, for one or more EVs, a pre-trip SoC based on the initial SoC and a charging potential based on available charging time before the route, and a post-trip SoC based on the pre-trip SoC and energy consumption for the route;
selecting an EV for the route based on a predefined selection criterion related to at least one of the pre-trip SoC and the post-trip SoC; and
mapping the selected EV to the route;
determining a charging schedule for the EV fleet based on a charging duration factor (CDF), wherein the CDF is determined based on the energy pricing information and is inversely proportional to the average energy cost during a charging period; and
outputting a dispatch plan comprising the route mappings and the charging schedule for the EV fleet.

2. The method (100) according to claim 1 further comprising:
generating a vehicle-route feasibility matrix comprising EVs and routes as rows and columns, wherein each cell of the vehicle-route feasibility matrix represents a required SoC for a corresponding EV to serve a corresponding route;
populating the cells of the vehicle-route feasibility matrix with required SoC values determined based on the fleet information and the route information; and
marking cells of the vehicle-route feasibility matrix as infeasible based on predefined constraints including at least one of vehicle range limitations, vehicle type compatibility, and schedule overlapping.

3. The method (100) according to claim 2, wherein the pre-trip SoC, the charging potential, the post-trip SoC and the energy consumption for the route are determined for each of feasible EVs, wherein the feasible EVs include EVs having corresponding cells in the vehicle-route feasibility matrix that are not marked as infeasible for the given route.

4. The method (100) according to claim 2, further comprising updating the vehicle-route feasibility matrix after mapping each selected EV to a route to reflect routes with time slots overlapping time slots occupied by the mapped route.

5. The method (100) according to claim 2, wherein the predefined constraints for marking cells as infeasible in the vehicle-route feasibility matrix further include at least one of: battery capacity limitations, charging infrastructure availability, and required vehicle features for specific routes.

6. The method (100) according to claim 1, wherein selecting the EV for the route based on the predefined selection criterion comprises selecting the EV with a lowest post-trip SoC.

7. The method (100) according to claim 1, wherein determining the charging schedule further comprises ensuring that each EV is charged to a required SoC based on available charging facilities at a corresponding depot.

8. The method (100) according to claim 1, further comprising:
determining a total distance covered by the EV fleet based on the dispatch plan by summing the distances of all routes assigned to the EVs;
determining a total block distance by summing the distances of all routes in the set of routes, including both assigned and unassigned routes; and
determining a distance coverage percentage based on the total distance covered by the EV fleet and the total block distance.

9. The method (100) according to claim 8, further comprising:
comparing the determined distance coverage percentage to a predetermined target percentage;
if the determined distance coverage percentage is below the target percentage, iteratively adjusting the dispatch plan to accommodate one or more unassigned routes with minimal impact on the charging schedule;
if the determined distance coverage percentage is above the target percentage, optimizing the charging schedule to further minimize energy costs with minimal impact on the high distance coverage percentage.

10. The method (100) according to claim 1, further comprising:
comparing energy costs for charging EVs with fuel costs for fuel-based vehicles;
updating the dispatch plan to allocate EVs and fuel-based vehicles to the routes based on the comparison, to minimize total cost.

11. A system (200) comprising:
one or more processing units (204); and
a memory unit (206) communicatively coupled to the one or more processing units (204), wherein the memory unit (206) comprises a dispatch planning module (216) stored in the form of machine-readable instructions executable by the one or more processing units (204), wherein the dispatch planning module (216) is configured to perform method (100) steps for dispatch planning of an electric vehicle (EV) fleet, according to any of the claims 1 to 10.

12. A computer-program product having machine-readable instructions stored therein, which when executed by one or more processing units (204), cause the one or more processing units (204) to perform a method (100) according to any of the claims 1 to 10.
